# EUROPÄISCHE PATENTANMELDUNG

(11) **EP 0 739 647 A1**
(43) Veröffentlichungstag der Anmeldung: **30.10.1996**
(21) Anmeldenummer: 96105520.9
(22) Anmeldetag: 06.04.1996
(51) Int. Cl.: B01D 1/00

(54) **Kapillarverdampfer**

(30) Priorität: 25.04.1995 DE 19515095
(71) Anmelder: DORNIER GmbH, D-88039 Friedrichshafen (DE)
(72) Erfinder: Schütz, Winfried, Dr., 01968 Senftenberg (DE); Huchler, Markus, Dipl.-Ing., 88074 Meckenbeuren (DE); Kreeb, Helmut, Dr., 88709 Meersburg (DE)
(74) Vertreter: Landsmann, Ralf, Dipl.-Ing.

(57) **Zusammenfassung**

Die Erfindung betrifft einen Verdampfer für Zweiphasen-Kreisläufe mit einem Einlaß für die Flüssigkeit, einem Einlaß für den Wärmestrom, einem Dampfaustritt und einem im Verdampfergehäuse befindlichen Kapillarkörper. Die Wand des Flüssigkeitsreservoirs im Verdampfer weist mehrere offene Rillen (18) nach Art von Heat Pipes auf.

## Beschreibung

Die Erfindung betrifft einen Verdampfer für Zweiphasen-Kreisläufe mit einem Einlaß für die Flüssigkeit, einem Einlaß für den Wärmestrom, einem Dampfaustritt und einem im Verdampfergehäuse befindlichen Kapillarkörper.

Immer wieder bestehen Probleme mit Dampfblasenbildung und Inertgasblasenbildung in Verdampfern von Zweiphasen-Kreisläufen. Dadurch wird die Leistungsfähigkeit des Verdampfers verringert und es besteht die Gefahr des völligen Austrocknens des Kapillarkörpers. Die Gasblasen blockieren das Kapillarmaterial des Verdampfers und es kommt zum Ausfall des Kühlkreislaufs.

Zwei Effekte können zum Austrocknen des Kapillarkörpers führen. So führt ein Unterschreiten einer minimalen Wärmelast auf den Verdampfer durch Wärmeleitung zu einer langsamen und gleichmäßigen Temperaturerhöhung des gesamten Kapillarmaterials und des darin befindlichen Wärmeträgers. Es findet keine kontrollierte Überhitzung und in der Folge Verdampfung mehr statt wie bei höheren Wärmelasten. Dadurch kommt es schon in der Flüssigkeit zu Verdampfungen. Dampfblasen bilden sich auf der Flüssigkeitsseite des Verdampfers, die die Zirkulation des Wärmeträgers im Kreislauf zum Erliegen bringen und zum Austrocknen des Kapillarkörpers führen können.

Zum anderen kann der Siedeverzug verbunden mit einem behinderten Abströmen von Dampf aus dem Kapillarmaterial zu Druck-Oszillationen führen. Dampfblasen werden durch das Kapillarmaterial zur Flüssigkeitsseite gepreßt, dadurch kann das Kapillarmaterial austrocknen und der Kreislauf ausfallen.

Ähnliches trifft auf den Vorgang der Inbetriebnahme des Kreislaufs zu. Zum Beispiel aufgrund der Erdschwere oder durch Drehbeschleunigungen kann es zur unkontrollierten Phasentrennung im Kreislauf kommen. Der gesamte Verdampfer kann trockenfallen und in der Folge kann es zum Austrocknen des Kapillarkörpers kommen. Der Zweiphasen-Kreislauf kann nicht gestartet werden.

Aufgabe der Erfindung ist es, einen Verdampfer zu schaffen, der es ermöglicht, blasenresistent bei niedriger minimaler Wärmelast zu arbeiten. Blasenresistent bedeutet, daß die Funktionsfähigkeit des Kreislaufs auch dann gewährleistet ist, wenn im Verdampfer Gasblasen oder Dampfblasen auftreten. Zugleich soll das Anfahrverhalten des Kreislaufs verbessert werden.

Die Aufgabe wird durch den Gegenstand des Patentanspruchs gelöst.

Eine Resistenz gegen Dampfblasenbildung kann erreicht werden durch Ausformen der Wand des Flüssigkeitsreservoirs im Verdampfer mit offenen Rillen entsprechend der inneren Struktur einer Heat Pipe. Dadurch wird eine "Offene Heat Pipe" gebildet, die mit dem eigentlichen Kapillarkörper in Verbindung steht und stets mit Flüssigkeit benetzt ist. Durch konstruktive Maßnahmen ist sichergestellt, daß die Rillen stets formschlüssig mit dem Kapillarmaterial in Verbindung stehen. Aufgrund der Kapillarwirkung in den Rillen wird bei Auftreten von Dampfblasen das Flüssigkeits-Dampf-Gemisch getrennt und dem eigentlichen Kapillarkörper ständig Flüssigkeit nachgeliefert. Durch Dimensionierung der Rillen, kann die Versorgung des Kapillarmaterials mit Flüssigkeit in Grenzen auch gegen die Schwerkraft erfolgen. Damit ist eine Benetzung des Kapillarkörpers mit Flüssigkeit in jedem Fall gewährleistet. Gasblasen und Dampfblasen führen zwar zu einer Leistungseinbuße, die Verdampfung selbst als treibender Motor des Kreislaufs bleibt aber aufrechterhalten. Im Normalbetrieb (blasenfreier Verdampfer) findet der Flüssigkeitstransport hauptsächlich außerhalb der Rillen der "Offenen Heat Pipe" statt.

Die minimale Wärmelast, die zur kontrollierten Verdampfung nötig ist, hängt weitgehend von parasitären Wärmeströmen durch Wärmeleitung durch das Kapillarmaterial selbst und durch das Verdampfergehäuse ab. Zur Reduzierung der minimalen Wärmelast muß der Wärmeeintrag in die Flüssigkeit reduziert werden. Dazu wurde bereits früher eine Kunststoffeinlage im Verdampfergehäuse vorgeschlagen, die als Thermischer Isolator dient. In Weiterentwicklung dieser Idee soll nun dieser Gegenstand mit Rillen versehen und als "Offene Heat Pipe" verwendet werden.

Die oben erwähnten Eigenschaften des Verdampfers gewährleisten bei richtiger Auslegung des Verdampfers (Volumen und Abmessungen müssen angepaßt sein an die Kreislauf-Abmessungen) eine dauernde Benetzung des Kapillarkörpers auch im Stillstand und eine minimale Wärmelast zum Anfahren des Kreislaufs.

Die Erfindung wird nachfolgend anhand von Fig. näher erläutert.

Es zeigen:
- Fig. 1: einen erfindungsgemäßen Kapillarverdampfer in prinzipieller Darstellung und
- Fig. 2 und 3: Einzelheiten von Fig. 1.

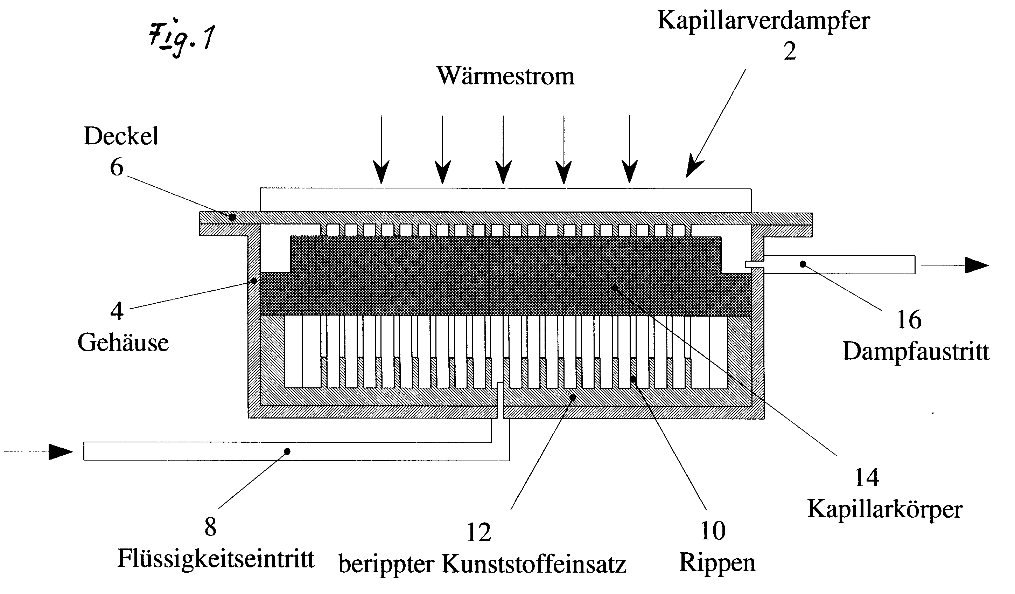

Der in Fig. 1 gezeigte Kapillarverdampfer **2** besteht aus folgenden Bauteilen: Gehäuse **4** mit Deckel **6**, Flüssigkeitseintritt **8**, mit Rippen **10** versehener Kunststoffeinsatz **12**, Kapillarkörper **14** und Dampfaustritt **16**.

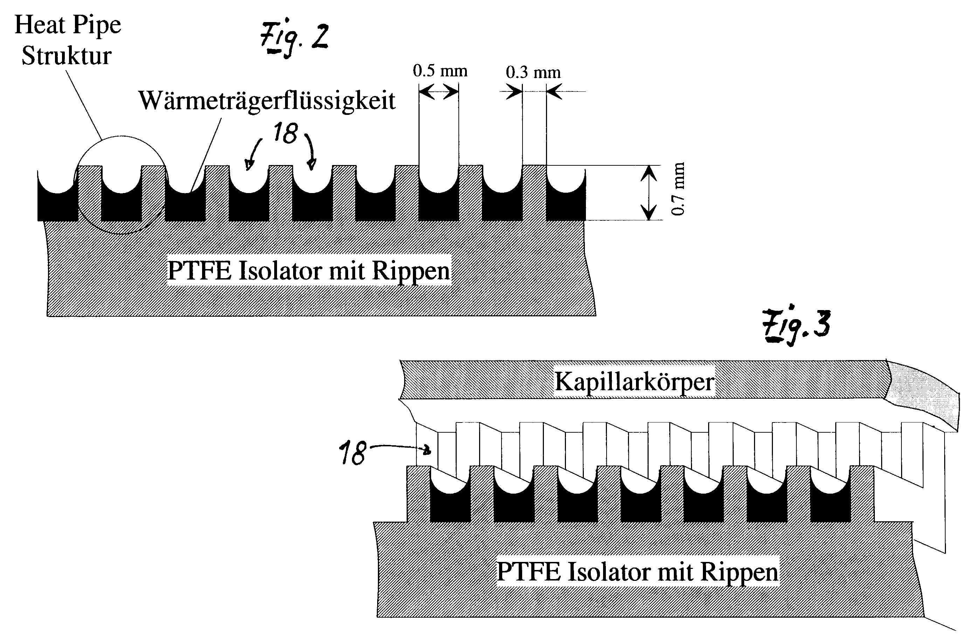

In Fig. 2 und 3 sind Einzelheiten von Fig. 1 dargestellt, wobei insbesondere die Rillen **18** der Heat-Pipe Struktur zu erkennen sind. Die angegebenen Maße und Materialien sind beispielhaft und können bei einzelnen Anwendungsfällen adaptiert werden.

## Patentansprüche

1. Verdampfer für Zweiphasen-Kreisläufe mit einem Einlaß für die Flüssigkeit, einem Einlaß für den Wärmestrom, einen Dampfaustritt und einem im Verdampfergehäuse befindlichen Kapillarkörper, **dadurch gekennzeichnet**, daß die Wand des Flüssigkeitsreservoirs im Verdampfer mehrere offene Rillen nach Art von Heat Pipes aufweist und die Rillen mit dem Kapillarkörper in Verbindung stehen.
